# EUROPEAN PATENT SPECIFICATION

(11) **EP 2 916 533 B1**
(45) Date of publication and mention of the grant of the patent: **14.02.2018**
(21) Application number: 14305299.1
(22) Date of filing: 03.03.2014
(51) Int. Cl.: H04M 15/00

(54) **QUALITY BASED COMMUNICATION CHARGING IN A TELECOMMUNICATION NETWORK**
AUF QUALITÄT BASIERENDE KOMMUNIKATIONSLADUNG IN EINEM TELEKOMMUNIKATIONSNETZWERK
FACTURATION DE COMMUNICATION BASÉE SUR LA QUALITÉ DANS UN RÉSEAU DE TÉLÉCOMMUNICATION

(43) Date of publication of application: 09.09.2015
(73) Proprietor: ALCATEL LUCENT, 92100 Boulogne-Billancourt (FR)
(72) Inventor: Kashyap, Gaurav, 122016 Gurgaon (IN); Ansari, Mohammed, 124507 Bahadurgarh (IN); Bhatt, Subha, 122016 Gurgaon (IN)
(74) Representative: Mouney, Jérôme

(56) References cited:
- WO-A1-2009/090582
- WO-A1-2011/063543
- WO-A2-01/63898
- WO-A2-2013/029861
- US-A1- 2008 020 731
- ANONYMOUS: "Digital cellular telecommunications system (Phase 2+);Discontinuous Transmission (DTX) for Adaptive Multi-Rate(AMR) speech traffic channels(GSM 06.93 version 7.4.0 Release 1998)", ETSI standards, 31 July 2000 (2000-07-31), XP002724983, Sophia Antipolis Cedex France Retrieved from the Internet: URL:http://www.etsi.org/deliver/etsi_en/30 1700_301799/301707/07.04.00_40/en_301707v0 70400o.pdf [retrieved on 2014-05-27]

## Description

### FIELD OF THE INVENTION

The present invention pertains to the management of communications in a telecommunication network, more especially the billing of communications in a wireless telecommunication network.

### BACKGROUND

Currently, telecommunication service providers use charging systems in order to charge their customers based on service usage, especially based on the minutes consumed by the users for voice communications.

There is a need to improve the customer experience and to offer charging plan adapted to the network resources usage by the customer.

### SUMMARY

This summary is provided to introduce concepts related to the present inventive subject matter. This summary is not intended to identify essential features of the claimed subject matter nor is it intended for use in determining or limiting the scope of the claimed subject matter.

In accordance with one embodiment, a method is provided for charging a voice communication established by a communication device with a communication entity within a wireless telecommunications network via a base station, comprising the following steps in a network element included in the telecommunications network:
receiving a message from the base station, the message containing information about the number and the quality of speech frames identified by the base station from traffic frames sent by the communication device using a discontinuous transmission,
generating a file of charging data record containing speaking usage durations associated with different voice qualities deduced from the number and the quality of speech frames,
sending the file to a charging server in order to charge the voice communication.

Advantageously, the invention offers an additional feature to the telecommunication network, allowing it to offer new tariff plan in the market wherein charging of voice calls is on the basis of speaking usage and quality of speaking usage, and to optimize the resources and the usage of the telecommunication network.

Additionally, the invention enhances system capacity by reducing interference in adjacent cells and to mobile communication devices close to the base station. Furthermore, as transmit time is reduced when discontinuous transmission is used, the power consumption of mobile communication devices is reduced, which gives users the option of fitting their mobile communication devices with smaller batteries.

In an embodiment, the voice qualities are classified as good voice quality, degraded voice quality or bad voice quality.

In an embodiment, quality of a speech frame is define by an attribute related to errors in bits of the speech frame.

In an embodiment, the network element contains a discontinuous transmission handler triggered to monitor the speech activity of the user of the communication device, in order to assess whether the signal of the voice communication contains speech or not.

The invention also pertains to a network element for charging a voice communication established by a communication device with a communication entity within a wireless telecommunications network via a base station, the network element comprising:
means for receiving a message from the base station, the message containing information about the number and the quality of speech frames identified by the base station from traffic frames sent by the communication device using a discontinuous transmission,
means for generating a file of charging data record containing speaking usage durations associated with different voice qualities deduced from the number and the quality of speech frames,
means for sending the file to a charging server in order to charge the voice communication.

The invention also pertains to a computer program capable of being implemented within a network element, said program comprising instructions which, when the program is executed within said network element, carry out steps according to the method according to the invention. Another example of prior art is
WO2013/029861.

### BRIEF DESCRIPTION OF THE FIGURES

The present invention and the benefits thereof shall be better understood upon examining the description below, which makes reference to the attached figures, in which:
- FIG. 1 is a schematic block diagram of a communication system according to one embodiment of the invention for communication charging in in a telecommunication network; and
- FIG. 2 is an algorithm of a method or communication charging in a telecommunication network according to one embodiment of the invention.

The same reference number represents the same element or the same type of element on all drawings.

### DESCRIPTION OF EMBODIMENTS

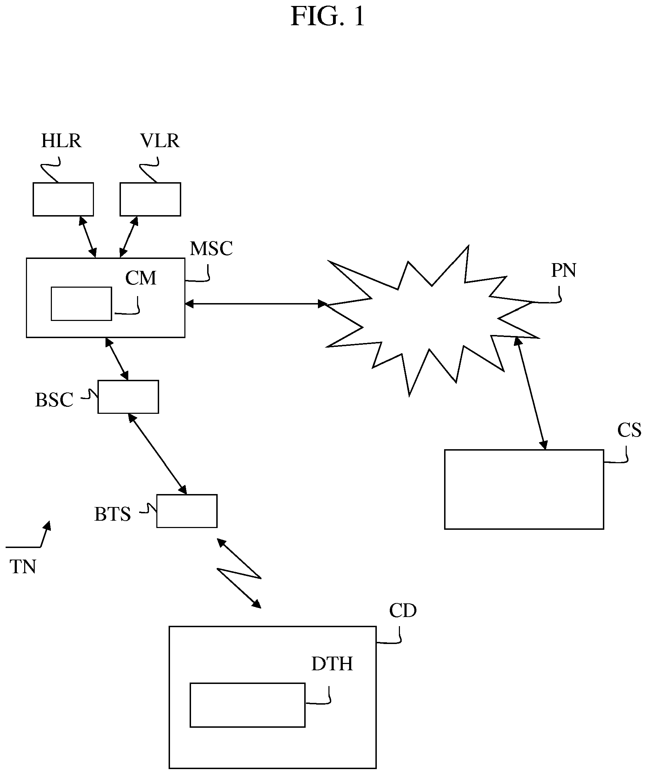

With reference to FIG. 1, a communication system according to the invention comprises a telecommunication network TN, a communication device CD, a network element like a switch MSC, and a charging server CS.

For example, the telecommunication network TN is a GSM (Global System for Mobile communications) or UMTS (Universal Mobile Telecommunications System), or LTE (Long Term Evolution) digital cellular radio communication network. The telecommunication network TN may be coupled with a packet network PN, like a GPRS (General Packet Radio Service) network for the transmission of data by packets with mobility and access management via radio. The packet network PN is a high-speed IP network, such as the Internet.

Figure 1 depicts components of the location area of the telecommunication network TN of GSM type where the communicating device CD is situated. The location area comprises an MSC (Mobile service Switching Center) which is connected by means of a BSC (Base Station Controller) to a base station BTS (Base Transceiver Station) connected by means of a radio link to the communicating device CD.

The telecommunication network TN comprises a location register HLR (Home Location Register) and one or more VLR (Visitor Location Register) location registers connected to the switch MSC. The HLR register is similar to a database containing an international identity IMSI (International Mobile Subscriber Identity) associated with a subscription profile for each user in the telecommunication network TN. The register VLR is a relay of the register HLR and contains characteristics of the users located in the location area to manage their mobility.

Within the telecommunication network TN, the base station controller BSC and switch MSC can be respectively connected to a service node SGSN (Serving GPRS Support Node) and a gateway-node GGSN (Gateway GPRS Support Node).

The communication device CD is capable of establishing a communication within a telecommunication network TN, for example with another user terminal. A communication device CD may, for instance, be a mobile telephone, an electronic telecommunication device or object that is personal to the user and which may be a personal digital assistant (PDA) or a smartphone.

The communication device CD comprises a discontinuous transmission handler DTH.

For example, the discontinuous transmission handler DTH may comprise a speech encoder, a voice activity detector and a comfort noise computation in accordance with document ETSI EN 301 707 V7.4.0.

The discontinuous transmission handler DTH passes traffic frames, individually marked by TX_TYPE, to the radio subsystem of the telecommunication network, i.e. the base station BTS. Each frame passed to the base station consists of bit fields containing the information bits, the codec mode indication, and the TX_TYPE. TX_TYPE is used to specify the contents of the frame.

The voice activity detector classifies the input signal into active speech, inactive speech or background noise. Based on the classification, the discontinuous transmission handler DTH inserts Silence Insertion Descriptor (SID) frames during the silence intervals. During silence, SID's frames are periodically sent to the comfort noise computation module, which generates ambient noise during periods of inactive speech on the receive side.

The voice activity detector further classifies speech frames according three different TX_TYPE attributes:
- SPEECH_GOOD: a speech frame of size between 95 and 244 bits depending on codec mode, with no errors known;
- SPEECH_DEGRADED: a speech frame of size between 95 and 244 bits depending on codec mode, there might be errors in class 2 bits;
- SPEECH_BAD: a speech frame of size between 95 and 244 bits depending on codec mode, there are errors in class 1 bits.

The network element is for example a switch MSC and comprises a charging module CM able to monitor a voice channel, to assess the quality of speech frames and to generate charging data records.

The charging module CM determines the number of non-speech frames, the number of speech frames and the quality of speech frames.

The charging module CM generates charging data records based on the number of speech frames and the quality of speech frames, and on call information.

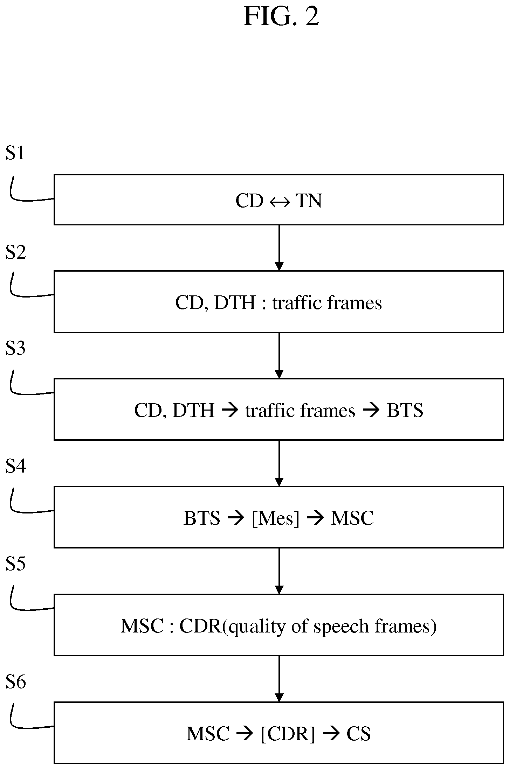

With reference to FIG. 2, a method for communication charging in a wireless telecommunication network according to one embodiment of the invention comprises steps S1 to S6 executed within the communication system.

In step S1, the communication device CD establishes a voice communication with a communication entity within the network TN via a base station BTS, for example with another communication device.

The discontinuous transmission handler DTH is triggered to monitor the speech activity of the user. The discontinuous transmission handler DTH may be operating all the time in order to assess whether the input signal contains speech or not.

In step S2, the discontinuous transmission handler DTH provides traffic frames, each frame comprising bit fields containing the information bits, the codec mode indication, and the TX_TYPE. Additionally, the discontinuous transmission handler DTH assigns a binary flag (VAD flag ="1" when signal contains speech or VAD flag ="0" when signal does not contain speech, respectively) on a frame by frame basis. The VAD flag controls indirectly the overall discontinuous transmission operation on the transmit side.

In step S3, the discontinuous transmission handler DTH transmits traffic frames to the radio subsystem of the telecommunication network, i.e. the base station BTS. The base station BTS is able to handle the received traffic frames according to the discontinuous transmission mechanism.

In step S4, the base station BTS identifies speech frames and non-speech frames among the received frames till the end of the voice communication. The base station BTS determines the number of speech frames and the quality of speech frames. More especially, the base station BTS determines the number of speech frames with SPEECH_GOOD attribute, the number of speech frames with SPEECH_DEGRADED attribute and the number of speech frames with SPEECH_BAD attribute.

When the voice communication is over, the base station BTS sends a message Mes to the network element such as the switch MSC, the message containing information about the number of speech frames of each TX_TYPE.

In step S5, the charging module CM of the network element generates a file of charging data record CDR.

One of the functions of the network element is to calculate channel utilization. The network element is able to monitor the voice channel and prepares the detail charging data record of the voice communication having different call information such as call duration, speaking usage duration, date time, etc.

More especially, the speaking usage duration is deduced from the number of speech frames and non-speech frames. The charging module CM computes the billing for the speech frames with good voice quality, with degraded voice quality and with bad voice quality.

For example, a rate is defined at 1 unit per minute for communication with good voice quality, at 0.5 unit per minute for communication with degraded voice quality, and free for communication with bad voice quality.

In step S6, the network element transmits the file to the charging server CS. Thus, the charging server CS can have information for charging the voice communication based on speaking usage and the quality of the speech frames.

For example, with the tariff rates described above, if a user makes a call to another user for 5 minutes, including 3 minutes with good voice quality, 1 minute with degraded voice quality and 1 minute with bad voice quality, the final cost of communication would be 3.5 units (3+0.5+free).

The invention described here relates to a method and a network element for charging of communications in a telecommunication network. According to one implementation of the invention, the steps of the invention are determined by the instructions of a computer program incorporated into the network element. The program comprises program instructions which, when said program is loaded and executed within the network element, carry out the steps of the method.

Consequently, the invention also applies to a computer program, particularly a computer program on or within an information medium, suitable to implement the invention. This program may use any programming language, and be in the form of source code, object code, or intermediate code between source code and object code, such as in a partially compiled form, or in any other form desirable for implementing the method without departing from the scope of the invention as it is depicted in the appended claims.

## Claims

1. A method for charging a voice communication established by a communication device (CD) with a communication entity within a wireless telecommunications network (TN) via a base station (BTS), **characterized by** comprising the following steps in a network element included in the telecommunications network:
receiving (S3) a message from the base station (BTS), the message containing information about the number and the quality of speech frames identified by the base station from traffic frames sent by the communication device using a discontinuous transmission,
generating (S5) a file of charging data record containing speaking usage durations associated with different voice qualities deduced from the number and the quality of speech frames,
sending (S6) the file to a charging server (CS) in order to charge the voice communication.

2. A method according to claim 1, whereby the voice qualities are classified as good voice quality, degraded voice quality or bad voice quality.

3. A method according to claim 1 or 2, whereby quality of a speech frame is define by an attribute related to errors in bits of the speech frame.

4. A method according to any of claims 1 to 3, whereby the network element contains a discontinuous transmission handler triggered to monitor the speech activity of the user of the communication device, in order to assess whether the signal of the voice communication contains speech or not.

5. A network element adapted for charging a voice communication established by a communication device (CD) with a communication entity within a wireless telecommunications network (TN) via a base station (BTS), **characterized by** network element comprising:
means (CM) for receiving a message from the base station (BTS), the message containing information about the number and the quality of speech frames identified by the base station from traffic frames sent by the communication device using a discontinuous transmission,
means (CM) for generating a file of charging data record containing speaking usage durations associated with different voice qualities deduced from the number and the quality of speech frames,
means (CM) for sending the file to a charging server (CS) in order to charge the voice communication.

6. A network element according to claim 5, whereby the network element is a Mobile service Switching Center.

7. A computer program capable of being implemented within a network element for charging a voice communication established by a communication device (CD) with a communication entity within a wireless telecommunications network (TN) via a base station (BTS), said program is **characterized by** comprising instructions which, when the program is loaded and executed within said network element, carry out the following steps:
receiving (S3) a message from the base station (BTS), the message containing information about the number and the quality of speech frames identified by the base station from traffic frames sent by the communication device using a discontinuous transmission,
generating (S5) a file of charging data record containing speaking usage durations associated with different voice qualities deduced from the number and the quality of speech frames,
sending (S6) the file to a charging server (CS) in order to charge the voice communication.

## Patentansprüche

1. Verfahren zum Laden einer Sprachkommunikation, die von einem Kommunikationsgerät (CD) mit einer Kommunikationsentität innerhalb eines drahtlosen Telekommunikationsnetzwerks (TN) über eine Basisstation (BTS) aufgebaut wird, **gekennzeichnet dadurch, dass** die folgenden Schritte in einem Netzwerkelement in dem Telekommunikationsnetzwerk eingeschlossen sind:
Empfangen (S3) einer Nachricht von der Basisstation (BTS), wobei die Nachricht Information enthält über die Anzahl und die Qualität der Sprachrahmen, die von der Basisstation aus den Verkehrsrahmen identifiziert werden, die von dem Kommunikationsgerät gesendet werden, unter Verwenden einer diskontinuierlichen Übertragung,
Erzeugen (S5) einer Datei eines Vergebührungsdatensatzes, die Sprachgebrauchsdauern umfasst, die verbunden sind mit verschiedenen Sprachqualitäten, die aus der Anzahl und der Qualität der Sprachrahmen abgeleitet werden,
Senden (S6) der Datei an einen Vergebührungsserver (CS), um die Sprachkommunikation zu laden.

2. Verfahren nach Anspruch 1, wobei die Sprachqualitäten klassifiziert werden als gute Sprachqualität, verminderte Sprachqualität oder schlechte Sprachqualität.

3. Verfahren nach Anspruch 1 oder 2, wobei die Qualität eines Sprachrahmens definiert ist durch eine Eigenschaft, die mit Bitfehlern des Sprachrahmens verbunden ist.

4. Verfahren nach einem beliebigen der Ansprüche 1 bis 3, wobei das Netzwerkelement umfasst einen diskontinuierlichen Übertragungs-Handler, der ausgelöst wird zum Überwachen der Sprachaktivität des Nutzers des Kommunikationsgeräts, um zu bewerten, ob das Signal der Sprachkommunikation Sprache enthält oder nicht.

5. Netzwerkelement, ausgelegt zum Belasten einer Sprachkommunikation, die von einem Kommunikationsgerät (CD) mit einer Kommunikationsentität innerhalb eines drahtlosen Telekommunikationsnetzwerks (TN) über eine Basisstation (BTS) aufgebaut wird, **gekennzeichnet dadurch, dass** das Netzwerkelement umfasst:
Mittel (CM) zum Empfangen einer Nachricht von der Basisstation (BTS), wobei die Nachricht Information enthält über die Anzahl und die Qualität der Sprachrahmen, die von der Basisstation aus den Verkehrsrahmen identifiziert werden, die von dem Kommunikationsgerät gesendet werden, unter Verwenden einer diskontinuierlichen Übertragung,
Mittel (CM) zum Erzeugen einer Datei eines Vergebührungsdatensatzes, die Sprachgebrauchsdauern umfasst, die verbunden sind mit verschiedenen Sprachqualitäten, die aus der Anzahl und der Qualität der Sprachrahmen abgeleitet werden,
Mittel (CM) zum Senden der Datei an einen Vergebührungsserver (CS), um die Sprachkommunikation zu laden.

6. Netzwerkelement nach Anspruch 5, wobei das Netzwerkelement eine Mobilfunk-Vermittlungsstelle ist.

7. Computerprogramm, das fähig ist, in einem Netzwerkelement implementiert zu werden zum Belasten einer Sprachkommunikation, die von einem Kommunikationsgerät (CD) aufgebaut wird innerhalb eines drahtlosen Kommunikationsnetzwerks (TN) über eine Basisstation (BTS), wobei besagtes Programm **gekennzeichnet ist durch** Umfassen von Befehlen, welche, wenn das Programm innerhalb besagten Netzwerkelements geladen und ausgeführt wird, die folgenden die folgenden Schritte ausführt:
Empfangen (S3) einer Nachricht von der Basisstation (BTS), wobei die Nachricht Information enthält über die Anzahl und die Qualität der Sprachrahmen, die von der Basisstation aus den Verkehrsrahmen identifiziert werden, die von dem Kommunikationsgerät gesendet werden, unter Verwenden einer diskontinuierlichen Übertragung,
Erzeugen (S5) einer Datei eines Vergebührungsdatensatzes, die Sprachgebrauchsdauern umfasst, die verbunden sind mit verschiedenen Sprachqualitäten, die aus der Anzahl und der Qualität der Sprachrahmen abgeleitet werden,
Senden (S6) der Datei an einen Vergebührungsserver (CS), um die Sprachkommunikation zu belasten.

## Revendications

1. Procédé pour facturer une communication vocale établie par un dispositif de communication (CD) avec une entité de communication dans un réseau de télécommunications sans fil (TN) via une station de base (BTS), **caractérisé en ce qu'**il comprend les étapes suivantes dans un élément de réseau inclus dans le réseau de télécommunications :
recevoir (S3) un message en provenance de la station de base (BTS), le message contenant des informations sur le nombre et la qualité de trames de parole identifiées par la station de base à partir de trames de trafic envoyées par le dispositif de communication en utilisant une transmission discontinue,
générer (S5) un fichier d'enregistrement de données de facturation contenant des durées d'utilisation de conversation associées à des qualités vocales différentes déduites du nombre et de la qualité de trames de parole,
envoyer (S6) le fichier à un serveur de facturation (CS) afin de facturer la communication vocale.

2. Procédé selon la revendication 1, dans lequel les qualités vocales sont classées comme bonne qualité vocale, qualité vocale dégradée ou mauvaise qualité vocale.

3. Procédé selon la revendication 1 ou 2, dans lequel la qualité d'une trame de parole est définie par un attribut lié à des erreurs dans des bits de la trame de parole.

4. Procédé selon l'une quelconque des revendications 1 à 3, dans lequel l'élément de réseau contient un gestionnaire de transmission discontinue déclenché pour surveiller l'activité de parole de l'utilisateur du dispositif de communication, afin d'évaluer si le signal de la communication vocale contient de la parole ou non.

5. Élément de réseau adapté pour facturer une communication vocale établie par un dispositif de communication (CD) avec une entité de communication dans un réseau de télécommunications sans fil (TN) via une station de base (BTS), **caractérisé par** l'élément de réseau comprenant :
des moyens (CM) pour recevoir un message en provenance de la station de base (BTS), le message contenant des informations sur le nombre et la qualité de trames de parole identifiées par la station de base à partir de trames de trafic envoyées par le dispositif de communication en utilisant une transmission discontinue,
des moyens (CM) pour générer un fichier d'enregistrement de données de facturation contenant des durées d'utilisation de conversation associées à des qualités vocales différentes déduites du nombre et de la qualité de trames de parole,
des moyens (CM) pour envoyer le fichier à un serveur de facturation (CS) afin de facturer la communication vocale.

6. Élément de réseau selon la revendication 5, dans lequel l'élément de réseau est un Centre de commutation de service mobile.

7. Programme informatique pouvant être mis en oeuvre dans un élément de réseau pour facturer une communication vocale établie par un dispositif de communication (CD) avec une entité de communication dans un réseau de télécommunications sans fil (TN) via une station de base (BTS), ledit programme étant **caractérisé en ce qu'**il comprend des instructions qui, lorsque le programme est chargé et exécuté dans ledit élément de réseau, effectuent les étapes suivantes :
recevoir (S3) un message en provenance de la station de base (BTS), le message contenant des informations sur le nombre et la qualité de trames de parole identifiées par la station de base à partir de trames de trafic envoyées par le dispositif de communication en utilisant une transmission discontinue,
générer (S5) un fichier d'enregistrement de données de facturation contenant des durées d'utilisation de conversation associées à des qualités vocales différentes déduites du nombre et de la qualité de trames de parole,
envoyer (S6) le fichier à un serveur de facturation (CS) afin de facturer la communication vocale.
